(19) Europäisches Patentamt
European Patent Office
Office européen des brevets

(11) **EP 4 322 020 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
***G06F 16/245*** (2019.01)     ***G06F 16/29*** (2019.01)
***G06T 7/73*** (2017.01)

(21) Application number: **22794861.9**

(22) Date of filing: **25.04.2022**

(86) International application number:
**PCT/CN2022/089007**

(87) International publication number:
**WO 2022/228391 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 CN 202110460636**

(71) Applicant: **Huawei Technologies Co., Ltd.
Shenzhen, Guangdong 518129 (CN)**

(72) Inventors:
• **XUE, Changliang**
  **Shenzhen, Guangdong 518129 (CN)**
• **LI, Heping**
  **Beijing 100013 (CN)**
• **WEN, Feng**
  **Shenzhen, Guangdong 518129 (CN)**
• **ZHANG, Hongbo**
  **Shenzhen, Guangdong 518129 (CN)**

(74) Representative: **Maiwald GmbH
Engineering
Elisenhof
Elisenstrasse 3
80335 München (DE)**

(54) **TERMINAL DEVICE POSITIONING METHOD AND RELATED DEVICE THEREFOR**

(57)     This application provides a terminal device localization method and a related device therefor, to improve accuracy of a localization result of a terminal device. The method in this application includes: obtaining, from a vector map, a first map point matching a first feature point in a current image frame shot by a terminal device; obtaining, from the vector map, a second map point matching a second feature point in another image frame before the current image frame; and adjusting, based on a target function, a pose in which the terminal device shoots the current image frame, to obtain a pose in which the terminal device shoots the current image frame and that is obtained after current adjustment, as a localization result of the terminal device. The target function includes a first matching error between the first feature point and the first map point and a second matching error between the second feature point and the second map point.

Obtain a first feature point in a current image frame, a second feature point in another image frame before the current image frame, a pose for the current image frame, and a pose that is for the another image frame and that is obtained after previous optimization — 201

Obtain, from a preset vector map based on the pose for the current image frame, a first map point matching the first feature point — 202

Obtain, from the vector map based on the pose that is for the another image frame and that is obtained after previous optimization, a second map point matching the second feature point — 203

Optimize, based on a target function, the pose for the current image frame, to obtain a pose that is for the current image frame and that is obtained after current optimization, as a localization result of a terminal device, where the target function includes a first matching error between the first feature point and the first map point and a second matching error between the second feature point and the second map point — 204

FIG. 2

## Description

This application claims priority to Chinese Patent Application No. 202110460636.4, filed with the China National Intellectual Property Administration on April 27, 2021 and entitled "TERMINAL DEVICE LOCALIZATION METHOD AND RELATED DEVICE THEREFOR", which is incorporated herein by reference in its entirety.

## TECHNICAL FIELD

This application relates to the field of artificial intelligence technologies, and in particular, to a terminal device localization method and a related device therefor.

## BACKGROUND

Currently, intelligent terminal devices such as self-driving vehicles, drone , and robots have been widely used in daily life. To accurately obtain real-time locations of the terminal devices, high-accuracy localization technology emerges.

In a localization process of a terminal device, current image frame shot by the terminal device could be obtained. A map point which matching a feature point that is in the current image frame and that presents an object in a traffic environment is obtained from a preset vector map (in the map, the object in the traffic environment may be represented by using map points, for example, a lamp post is represented by using a straight line formed by map points, and a sign is represented by using a rectangular box formed by map points). Finally, a localization result of the terminal device in the vector map is determined based on a result of matching between the feature point and the map point.

However, factors considered in the foregoing localization process of the terminal device are relatively limited. Consequently, the localization result of the terminal device is inaccurate.

## SUMMARY

Embodiments of this application provide a terminal device localization method and a related device therefor, to improve accuracy of a localization result of a terminal device.

A first aspect of embodiments of this application provides a terminal device localization method. The method includes:

a terminal device may shoot, in a moving process by using a camera, a traffic environment at a current moment, to obtain a current image frame. Further, the terminal device may further obtain another image frame before the current image frame. In this case, the terminal device may implement localization of the terminal device based on the current image frame and the another image frame.

Specifically, the terminal device first obtains, from a vector map, a first map point matching a first feature point in the current image frame. For example, a feature point used to present a traffic light in the current image frame and a map point used to represent the traffic light in the vector map are matched points, and a feature point used to present a lane line in the current image frame and a map point used to represent the lane line in the vector map are matched points. Similarly, the terminal device may further obtain, from the vector map, a second map point matching a second feature point in the another image frame before the current image frame.

There is a specific matching error between the first feature point and the first map point, and there is also a specific matching error between the second feature point and the second map point. Therefore, the two matching errors need to be made as small as possible, to improve accuracy of a localization result of the terminal device.

Based on this, the terminal device may construct a target function based on a first matching error between the first feature point and the first map point and a second matching error between the second feature point and the second map point, and adjust, based on the target function, a pose in which the terminal device shoots the current image frame, that is, optimize, based on the target function, the pose in which the terminal device shoots the current image frame, until the target function converges, to obtain a pose in which the terminal device shoots the current image frame and that is obtained after current adjustment (optimization), as a localization result of the terminal device in the vector map. The pose in which the terminal device shoots the current image frame is usually a pose of the terminal device in a three-dimensional coordinate system corresponding to the vector map during shooting of the current image frame.

It may be learned from the foregoing method that after the current image frame and the another image frame before the current image frame are obtained, the first map point matching the first feature point in the current image frame and the second map point matching the second feature point in the another image frame before the current image frame may be obtained from the vector map. Then, the pose in which the terminal device shoots the current image frame may be adjusted based on the target function constructed based on the first matching error between the first feature point and the first map point and the second matching error between the second feature point and the second map point, to obtain the pose in which the terminal device shoots the current image frame and that is obtained after current adjustment. In the foregoing process, the target function includes both a matching error between a feature point in the current image frame and a map point in the vector map and a matching error between a feature point in the another image frame and a map point in the vector map. Therefore, when the pose in which the terminal device shoots the current image frame is adjusted based on the target function, not only impact of the current image frame on a process of optimizing the pose in which the terminal device shoots the current image frame is considered, but also impact of the another image frame on the process of optimizing the pose in which the terminal device shoots the current image frame is considered, that is, association between the current image frame and the another image frame is considered. In this way, factors are more comprehensively considered. Therefore, the localization result of the terminal device obtained in this manner is more accurate.

In a possible implementation, the method further includes: obtaining the pose in which the terminal device shoots the current image frame and a pose in which the terminal device shoots the another image frame and that is obtained after previous adjustment, and performing semantic detection on the current image frame and the another image frame before the current image frame, to obtain the first feature point in the current image frame and the second feature point in the another image frame before the current image frame. Then, the first map point matching the first feature point may be obtained from the vector map based on the pose in which the terminal device shoots the current image frame, and the second map point matching the second feature point may be obtained from the vector map based on the pose in which the terminal device shoots the another image frame and that is obtained after previous adjustment. In this way, associative matching between a feature point and a map point may be completed.

In a possible implementation, adjusting, based on the target function, the pose in which the terminal device shoots the current image frame, to obtain the pose in which the terminal device shoots the current image frame and that is obtained after current adjustment includes: after obtaining a location of the first feature point in a first coordinate system and a location of the first map point in the first coordinate system, performing calculation based on a distance between the location of the first feature point in the first coordinate system and the location of the first map point in the first coordinate system, to obtain an initial value of the first matching error; then, after obtaining a location of the second feature point in a second coordinate system and a location of the second map point in the second coordinate system, performing calculation based on a distance between the location of the second feature point in the second coordinate system and the location of the second map point in the second coordinate system, to obtain an initial value of the second matching error; and finally, iteratively solving the target function based on the initial value of the first matching error and the initial value of the second matching error until a preset iteration condition is satisfied, to obtain the pose in which the terminal device shoots the current image frame and that is obtained after current adjustment. In the foregoing implementation, after matching between the first feature point and the first map point and matching between the second feature point and the second map point are completed, the initial value of the first matching error between the first feature point and the first map point and the initial value of the second matching error between the second feature point and the second map point may be calculated, to iteratively solve the target function based on the two initial values, which is equivalent to adjusting, based on the current image frame and the another image frame, the pose in which the terminal device shoots the current image frame. Factors are more comprehensively considered, so that the localization result of the terminal device is accurately obtained.

In a possible implementation, the distance between the location of the first feature point in the first coordinate system and the location of the first map point in the first coordinate system includes at least one of the following: (1) a distance between a location of the first feature point in the current image frame and a location of the first map point in the current image frame, where the location of the first map point in the current image frame is obtained based on a location of the first map point in the three-dimensional coordinate system corresponding to the vector map and the pose in which the terminal device shoots the current image frame; (2) a distance between a location of the first feature point in the three-dimensional coordinate system corresponding to the vector map and the location of the first map point in the three-dimensional coordinate system corresponding to the vector map, where the location of the first feature point in the three-dimensional coordinate system corresponding to the vector map is obtained based on the location of the first feature point in the current image frame and the pose in which the terminal device shoots the current image frame; and (3) a distance between a location of the first feature point in a three-dimensional coordinate system corresponding to the terminal device and a location of the first map point in the three-dimensional coordinate system corresponding to the terminal device, where the location of the first feature point in the three-dimensional coordinate system corresponding to the terminal device is obtained based on the location of the first feature point in the current image frame and the pose in which the terminal device shoots the current image frame, and the location of the first map point in the three-dimensional coordinate system corresponding to the terminal device is obtained based on the location of the first map point in the three-dimensional coordinate system corresponding to the vector map and the pose in which the terminal device shoots the current image frame.

In a possible implementation, the distance between the location of the second feature point in the second coordinate system and the location of the second map point in the second coordinate system includes at least one of the following: (1) a distance between a location of the second feature point in the another image frame and a location of the second map point in the another image frame, where the location of the second map point in the another image frame is obtained based on a location of the second map point in the three-dimensional coordinate system corresponding to the vector map and the pose in which the terminal device shoots the another image frame and that is obtained after previous adjustment; (2) a distance between a location of the second feature point in the three-dimensional coordinate system corresponding to the vector map and the location of the second map point in the three-dimensional coordinate system corresponding to the vector map, where the location of the second feature point in the three-dimensional coordinate system corresponding to the vector map is obtained based on the location of the second feature point in the another image frame and the pose in which the terminal device shoots the another image frame and that is obtained after previous adjustment; and (3) a distance between a location of the second feature point in a three-dimensional coordinate system corresponding to the terminal device and a location of the second map point in the three-dimensional coordinate system corresponding to the terminal device, where the location of the second feature point in the three-dimensional coordinate system corresponding to the terminal device is obtained based on the location of the second feature point in the another image frame and the pose in which the terminal device shoots the another image frame and that is obtained after previous adjustment, and the location of the second map point in the three-dimensional coordinate system corresponding to the terminal device is obtained based on the location of the second map point in the three-dimensional coordinate system corresponding to the vector map and the pose in which the terminal device shoots the another image frame and that is obtained after previous adjustment.

In a possible implementation, the iteration condition is: for any iteration, if a difference between an inter-frame pose difference obtained in the iteration and an inter-frame pose difference calculated by the terminal device is less than a preset threshold, stopping iteration, where the inter-frame pose difference obtained in the iteration is determined based on a pose that is obtained in the iteration and in which the terminal device shoots the current image frame and a pose that is obtained in the iteration and in which the terminal device shoots the another image frame, and the inter-frame pose difference is a pose difference between two adjacent image frames, shot by the terminal device, in the current image frame and the another image frame; or if a difference is greater than or equal to a threshold, performing a next iteration until a quantity of iterations is equal to a preset quantity.

In a possible implementation, a quantity of other image frames may change with a motion status of the terminal device. Specifically, the quantity of other image frames may be determined based on a speed of the terminal device.

In a possible implementation, the obtaining the pose in which the terminal device shoots the current image frame includes: calculating, based on the pose in which the terminal device shoots the another image frame and that is obtained after previous adjustment and the inter-frame pose difference calculated by the terminal device, a predicted pose in which the terminal device shoots the current image frame; and performing hierarchical sampling on the predicted pose in which the terminal device shoots the current image frame, to obtain the pose in which the terminal device shoots the current image frame. In the foregoing implementation, the pose that is obtained through hierarchical sampling and in which the terminal device shoots the current image frame may be used as an initial pose for current adjustment, so that a convergence speed and robustness of current adjustment are improved.

In a possible implementation, if the pose in which the terminal device shoots the current image frame includes a lateral axis coordinate, a longitudinal axis coordinate, and a yaw angle, the performing hierarchical sampling on the predicted pose in which the terminal device shoots the current image frame, to obtain the pose in which the terminal device shoots the current image frame includes: obtaining a location of a third map point in the three-dimensional coordinate system corresponding to the vector map and the location of the first feature point in the current image frame; keeping the yaw angle of the predicted pose in which the terminal device shoots the current image frame unchanged, and changing the lateral axis coordinate and the longitudinal axis coordinate of the predicted pose in which the terminal device shoots the current image frame, to obtain a first candidate pose; transforming, based on the first candidate pose, the location of the third map point in the three-dimensional coordinate system corresponding to the vector map, to obtain a location of the third map point in a preset image coordinate system; keeping the lateral axis coordinate and the longitudinal axis coordinate of the predicted pose in which the terminal device shoots the current image frame unchanged, and changing the yaw angle of the predicted pose in which the terminal device shoots the current image frame, to obtain a second candidate pose; transforming the location of the first feature point in the current image frame based on the second candidate pose, to obtain a location of the first feature point in the image coordinate system; and determining, from a combination of the first candidate pose and the second candidate pose based on a value of a distance between the location of the third map point in the image coordinate system and the location of the first feature point in the image coordinate system, the pose in which the terminal device shoots the current image frame. In the foregoing pose sampling manner, a calculation amount required in a pose sampling process may be effectively reduced.

In a possible implementation, if the pose in which the terminal device shoots the current image frame includes a lateral axis coordinate, a longitudinal axis coordinate, a vertical axis coordinate, a yaw angle, a roll angle, and a pitch angle, the performing hierarchical sampling on the predicted pose in which the terminal device shoots the current image frame, to obtain the pose in which the terminal device shoots the current image frame includes: obtaining a location of a third map point in the three-dimensional coordinate system corresponding to the vector map and the location of the first feature point in the current image frame; keeping the yaw angle, the roll angle, the pitch angle, and the vertical axis coordinate of the predicted pose in which the terminal device shoots the current image frame unchanged, and changing the lateral axis coordinate and the longitudinal axis coordinate of the predicted pose in which the terminal device shoots the current image frame, to obtain a first candidate pose; transforming, based on the first candidate pose, the location of the third map point in the three-dimensional coordinate system corresponding to the vector map, to obtain a location of the third map point in a preset image coordinate system; keeping the lateral axis coordinate, the longitudinal axis coordinate, the vertical axis coordinate, the roll angle, and the pitch angle of the predicted pose in which the terminal device shoots the current image frame unchanged, and changing the yaw angle of the predicted pose in which the terminal device shoots the current image frame, to obtain a second candidate pose; transforming the location of the first feature point in the current image frame based on the second candidate pose, to obtain a location of the first feature point in the image coordinate system; determining a third candidate pose from a combination of the first candidate pose and the second candidate pose based on a value of a distance between the location of the third map point in the image coordinate system and the location of the first feature point in the image coordinate system; keeping the lateral axis coordinate, the longitudinal axis coordinate, the yaw angle, and the roll angle of the predicted pose using the third candidate pose unchanged, and changing a pitch angle and a vertical axis coordinate of the third candidate pose, to obtain a fourth candidate pose; transforming, based on the fourth candidate pose, the location of the third map point in the three-dimensional coordinate system corresponding to the vector map, to obtain a location of the third map point in the current image frame; and determining, from the fourth candidate pose based on a value of a distance between the location of the first feature point in the current image frame and the location of the third map point in the current image frame, the pose in which the terminal device shoots the current image frame. In the foregoing pose sampling manner, a calculation amount required in a pose sampling process may be effectively reduced.

A second aspect of embodiments of this application provides a terminal device localization apparatus. The apparatus includes: a first matching module, configured to obtain, from a vector map, a first map point matching a first feature point in a current image frame; a second matching module, configured to obtain, from the vector map, a second map point matching a second feature point in another image frame before the current image frame; and an optimization module, configured to adjust, based on a target function, a pose in which a terminal device shoots the current image frame, to obtain a pose in which the terminal device shoots the current image frame and that is obtained after current adjustment, as a localization result of the terminal device. The target function includes a first matching error between the first feature point and the first map point and a second matching error between the second feature point and the second map point.

It may be learned from the foregoing apparatus that after the current image frame and the another image frame before the current image frame are obtained, the first map point matching the first feature point in the current image frame and the second map point matching the second feature point in the another image frame before the current image frame may be obtained from the vector map. Then, the pose in which the terminal device shoots the current image frame may be adjusted based on the target function constructed based on the first matching error between the first feature point and the first map point and the second matching error between the second feature point and the second map point, to obtain the pose in which the terminal device shoots the current image frame and that is obtained after current adjustment. In the foregoing process, the target function includes both a matching error between a feature point in the current image frame and a map point in the vector map and a matching error between a feature point in the another image frame and a map point in the vector map. Therefore, when the pose in which the terminal device shoots the current image frame is adjusted based on the target function, not only impact of the current image frame on a process of optimizing the pose in which the terminal device shoots the current image frame is considered, but also impact of the another image frame on the process of optimizing the pose in which the terminal device shoots the current image frame is considered, that is, association between the current image frame and the another image frame is considered. In this way, factors are more comprehensively considered. Therefore, the localization result of the terminal device obtained in this manner is more accurate.

In a possible implementation, the apparatus further includes an obtaining module, configured to obtain the first feature point in the current image frame, the second feature point in the another image frame before the current image frame, the pose in which the terminal device shoots the current image frame, and a pose in which the terminal device shoots the another image frame and that is obtained after previous adjustment. The first matching module is configured to obtain, from the vector map based on the pose in which the terminal device shoots the current image frame, the first map point matching the first feature point. The second matching module is configured to obtain, from the vector map based on the pose in which the terminal device shoots the another image frame and that is obtained after previous adjustment, the second map point matching the second feature point.

In a possible implementation, the optimization module is configured to: perform calculation based on a distance between a location of the first feature point in a first coordinate system and a location of the first map point in the first coordinate system, to obtain an initial value of the first matching error; perform calculation based on a distance between a location of the second feature point in a second coordinate system and a location of the second map point in the second coordinate system, to obtain an initial value of the second matching error; and iteratively solve the target function based on the initial value of the first matching error and the initial value of the second matching error until a preset iteration condition is satisfied, to obtain the pose in which the terminal device shoots the current image frame and that is obtained after current adjustment.

In a possible implementation, the distance between the location of the first feature point in the first coordinate system and the location of the first map point in the first coordinate system includes at least one of the following: a distance between a location of the first feature point in the current image frame and a location of the first map point in the current image frame; a distance between a location of the first feature point in a three-dimensional coordinate system corresponding to the vector map and a location of the first map point in the three-dimensional coordinate system corresponding to the vector map; and a distance between a location of the first feature point in a three-dimensional coordinate system corresponding to the terminal device and a location of the first map point in the three-dimensional coordinate system corresponding to the terminal device.

In a possible implementation, the distance between the location of the second feature point in the second coordinate system and the location of the second map point in the second coordinate system includes at least one of the following: a distance between a location of the second feature point in the another image frame and a location of the second map point in the another image frame; a distance between a location of the second feature point in a three-dimensional coordinate system corresponding to the vector map and a location of the second map point in the three-dimensional coordinate system corresponding to the vector map; and a distance between a location of the second feature point in a three-dimensional coordinate system corresponding to the terminal device and a location of the second map point in the three-dimensional coordinate system corresponding to the terminal device.

In a possible implementation, the iteration condition is: for any iteration, if a difference between an inter-frame pose difference obtained in the iteration and an inter-frame pose difference calculated by the terminal device is less than a preset threshold, stopping iteration, where the inter-frame pose difference obtained in the iteration is determined based on a pose that is obtained in the iteration and in which the terminal device shoots the current image frame and a pose that is obtained in the iteration and in which the terminal device shoots the another image frame, and the inter-frame pose difference is a pose difference between two adjacent image frames, shot by the terminal device, in the current image frame and the another image frame; or if a difference is greater than or equal to a threshold, performing a next iteration until a quantity of iterations is equal to a preset quantity.

In a possible implementation, a quantity of other image frames is determined based on a speed of the terminal device.

In a possible implementation, the obtaining module is configured to: calculate, based on the pose in which the terminal device shoots the another image frame and that is obtained after previous adjustment and the inter-frame pose difference calculated by the terminal device, a predicted pose in which the terminal device shoots the current image frame; and perform hierarchical sampling on the predicted pose in which the terminal device shoots the current image frame, to obtain the pose in which the terminal device shoots the current image frame.

In a possible implementation, if the pose in which the terminal device shoots the current image frame includes a lateral axis coordinate, a longitudinal axis coordinate, and a yaw angle, the obtaining module is configured to: obtain a location of a third map point in the three-dimensional coordinate system corresponding to the vector map and the location of the first feature point in the current image frame; keep the yaw angle of the predicted pose in which the terminal device shoots the current image frame unchanged, and change the lateral axis coordinate and the longitudinal axis coordinate of the predicted pose in which the terminal device shoots the current image frame, to obtain a first candidate pose; transform, based on the first candidate pose, the location of the third map point in the three-dimensional coordinate system corresponding to the vector map, to obtain a location of the third map point in a preset image coordinate system; keep the lateral axis coordinate and the longitudinal axis coordinate of the predicted pose in which the terminal device shoots the current image frame unchanged, and change the yaw angle of the predicted pose in which the terminal device shoots the current image frame, to obtain a second candidate pose; transform the location of the first feature point in the current image frame based on the second candidate pose, to obtain a location of the first feature point in the image coordinate system; and determine, from a combination of the first candidate pose and the second candidate pose based on a value of a distance between the location of the third map point in the image coordinate system and the location of the first feature point in the image coordinate system, the pose in which the terminal device shoots the current image frame. In the foregoing pose sampling manner, a calculation amount required in a pose sampling process may be effectively reduced.

In a possible implementation, if the pose in which the terminal device shoots the current image frame includes a lateral axis coordinate, a longitudinal axis coordinate, a vertical axis coordinate, a yaw angle, a roll angle, and a pitch angle, the obtaining module is configured to: obtain a location of a third map point in the three-dimensional coordinate system corresponding to the vector map and the location of the first feature point in the current image frame; keep the yaw angle, the roll angle, the pitch angle, and the vertical axis coordinate of the predicted pose in which the terminal device shoots the current image frame unchanged, and change the lateral axis coordinate and the longitudinal axis coordinate of the predicted pose in which the terminal device shoots the current image frame, to obtain a first candidate pose; transform, based on the first candidate pose, the location of the third map point in the three-dimensional coordinate system corresponding to the vector map, to obtain a location of the third map point in a preset image coordinate system; keep the lateral axis coordinate, the longitudinal axis coordinate, the vertical axis coordinate, the roll angle, and the pitch angle of the predicted pose in which the terminal device shoots the current image frame unchanged, and change the yaw angle of the predicted pose in which the terminal device shoots the current image frame, to obtain a second candidate pose; transform the location of the first feature point in the current image frame based on the second candidate pose, to obtain a location of the first feature point in the image coordinate system; determine a third candidate pose from a combination of the first candidate pose and the second candidate pose based on a value of a distance between the location of the third map point in the image coordinate system and the location of the first feature point in the image coordinate system; keep the lateral axis coordinate, the longitudinal axis coordinate, the yaw angle, and the roll angle of the predicted pose using the third candidate pose unchanged, and change a pitch angle and a vertical axis coordinate of the third candidate pose, to obtain a fourth candidate pose; transform, based on the fourth candidate pose, the location of the third map point in the three-dimensional coordinate system corresponding to the vector map, to obtain a location of the third map point in the current image frame; and determine, from the fourth candidate pose based on a value of a distance between the location of the first feature point in the current image frame and the location of the third map point in the current image frame, the pose in which the terminal device shoots the current image frame. In the foregoing pose sampling manner, a calculation amount required in a pose sampling process may be effectively reduced.

A third aspect of embodiments of this application provides a terminal device localization apparatus. The apparatus includes a memory and a processor. The memory stores code. The processor is configured to execute the code. When the code is executed, the terminal device localization apparatus performs the method according to the first aspect or any possible implementation of the first aspect.

A fourth aspect of embodiments of this application provides a vehicle. The vehicle includes the terminal device localization apparatus according to the third aspect.

A fifth aspect of embodiments of this application provides a computer storage medium. The computer storage medium stores a computer program. When the program is executed by a computer, the computer is enabled to implement the method according to the first aspect or any possible implementation of the first aspect.

A sixth aspect of embodiments of this application provides a computer program product. The computer program product stores instructions. When the instructions are executed by a computer, the computer is enabled to implement the method according to the first aspect or any possible implementation of the first aspect.

In embodiments of this application, after the current image frame and the another image frame before the current image frame are obtained, the first map point matching the first feature point in the current image frame and the second map point matching the second feature point in the another image frame before the current image frame may be obtained from the vector map. Then, the pose in which the terminal device shoots the current image frame may be adjusted based on the target function constructed based on the first matching error between the first feature point and the first map point and the second matching error between the second feature point and the second map point, to obtain the pose in which the terminal device shoots the current image frame and that is obtained after current adjustment. In the foregoing process, the target function includes both a matching error between a feature point in the current image frame and a map point in the vector map and a matching error between a feature point in the another image frame and a map point in the vector map. Therefore, when the pose in which the terminal device shoots the current image frame is adjusted based on the target function, not only impact of the current image frame on a process of optimizing the pose in which the terminal device shoots the current image frame is considered, but also impact of the another image frame on the process of optimizing the pose in which the terminal device shoots the current image frame is considered (that is, association between the current image frame and the another image frame is considered). In this way, factors are more comprehensively considered. Therefore, the localization result of the terminal device obtained in this manner is more accurate.

## BRIEF DESCRIPTION OF DRAWINGS

FIG. 1 is a schematic diagram of a vector map;
FIG. 2 is a schematic flowchart of a terminal device localization method according to an embodiment of this application;
FIG. 3 is a schematic diagram of a three-dimensional coordinate system corresponding to a terminal device according to an embodiment of this application;
FIG. 4 is a schematic diagram of an inter-frame pose difference according to an embodiment of this application;
FIG. 5 is a schematic diagram of a first feature point in a current image frame according to an embodiment of this application;

FIG. 6 is a schematic diagram of calculating an overlapping degree according to an embodiment of this application;

FIG. 7 is a schematic diagram of a structure of a terminal device localization apparatus according to an embodiment of this application; and

FIG. 8 is a schematic diagram of another structure of a terminal device localization apparatus according to an embodiment of this application.

## DESCRIPTION OF EMBODIMENTS

Embodiments of this application provide a terminal device localization method and a related device therefor, to improve accuracy of a localization result of a terminal device.

In the specification, claims, and accompanying drawings of this application, terms such as "first" and "second" are intended to distinguish between similar objects but do not necessarily indicate a specific order or sequence. It should be understood that the terms used in this way may be interchanged in appropriate cases, and this is merely a manner for distinguishing between objects with a same attribute for description in embodiments of this application. In addition, terms "include" and "have" and any variation thereof are intended to cover non-exclusive inclusions, so that a process, method, system, product, or device that includes a series of units is not necessarily limited to those units, but may include other units not clearly listed or inherent to such a process, method, product, or device.

Embodiments of this application may be implemented by a terminal device, for example, an in-vehicle device on a vehicle, a drone, or a robot. For ease of description, the following refers to the in-vehicle device on the vehicle as a vehicle, and uses a traveling vehicle as an example for description.

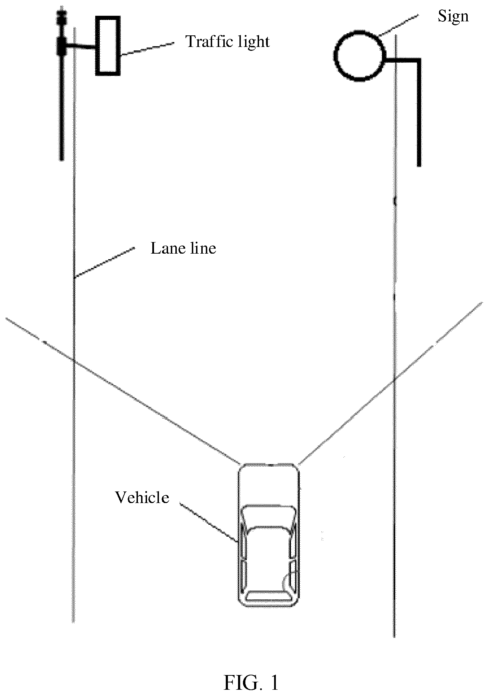

When the vehicle travels, if a user wants to determine a location of the vehicle, the user needs to perform high-accuracy localization on the vehicle. In a related technology, a complete vector map is usually preset on the vehicle. FIG. 1 is a schematic diagram of the vector map. As shown in FIG. 1, the vector map may display a virtual traffic environment in which the vehicle is currently located. The traffic environment includes objects around the vehicle, for example, a traffic light, a lamp post, a sign, and a lane line. These objects may be represented by using pixels on the vector map, that is, by using map points on the vector map. For example, the lamp post may be represented by a straight line formed by a plurality of map points, and the sign may be represented by a rectangular box formed by a plurality of map points. It should be noted that the virtual traffic environment displayed on the vector map is drawn based on a traffic environment in a real world, and a pose of the vehicle displayed on the vector map is generally obtained by the vehicle through calculation, and may be different from a real pose of the vehicle in the real world. Therefore, the pose of the vehicle on the vector map needs to be corrected and optimized, to improve accuracy of a localization result of the vehicle. It may be understood that the pose of the vehicle usually includes the location of the vehicle and an orientation of the vehicle. Details are not described again below.

Specifically, the vehicle in motion may shoot a current image frame, to present a real traffic environment in which the vehicle is located at a current moment. Then, the vehicle may match a feature point in the current image frame with a map point on the vector map, which is equivalent to matching the real traffic environment in which the vehicle is located with the virtual traffic environment in which the vehicle is located. Finally, the pose of the vehicle on the vector map is adjusted based on a result of matching between the feature point in the current image frame and the map point on the vector map, for example, a matching error between the feature point in the current image frame and the map point on the vector map, and an optimized pose of the vehicle is used as the localization result of the vehicle.

However, when the localization result of the vehicle is determined based on only the current image frame, considered factors are undiversified. Consequently, the localization result of the vehicle is inaccurate.

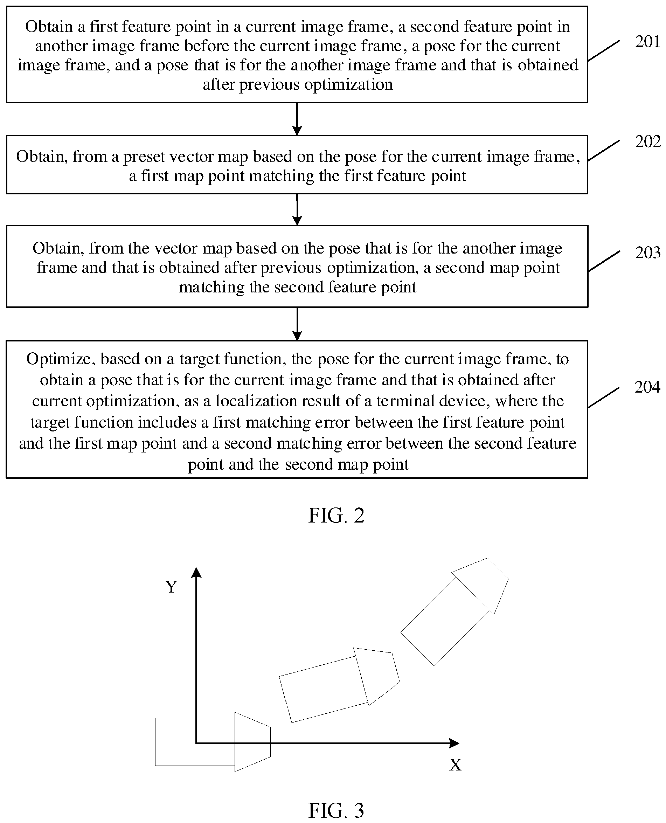

In view of this, an embodiment of this application provides a terminal device localization method, to improve accuracy of a localization result of a terminal device. For ease of description, a pose in which the terminal device shoots any image frame is referred to as a pose for the image frame below. For example, a pose in which the terminal device shoots a current image frame may be referred to as a pose for the current image frame. For another example, a pose in which the terminal device shoots another image frame before the current image frame may be referred to as a pose for the another image frame. For another example, current optimization (adjustment) may be performed on the pose in which the terminal device shoots the current image frame, to obtain a pose in which the terminal device shoots the current image frame and that is obtained after current optimization (adjustment), that is, a pose that is for the current image frame and that is obtained after current optimization. Details are not described again below. FIG. 2 is a schematic flowchart of the terminal device localization method according to an embodiment of this application. As shown in FIG. 2, the method includes the following steps.

201: Obtain a first feature point in the current image frame, a second feature point in the another image frame before the current image frame, the pose for the current image frame, and the pose that is for the another image frame and that is obtained after previous optimization.

In this embodiment, the terminal device has a camera. The terminal device in motion may shoot a current traffic environment by using the camera, to obtain the current image frame. Further, the terminal device may obtain the another image frame before the current image frame. A quantity of other image frames may be determined based on a speed of the terminal device, as shown in Formula (1):

$$t = t_0 + |\alpha * \sqrt{v}| \qquad (1)$$

In the foregoing formula, $t$ indicates a quantity of the current image frame and other image frames, $t$ - 1 indicates the quantity of other image frames, $t_0$ indicates a preset threshold, $\alpha$ indicates a preset adjustment coefficient, and V indicates a speed of the terminal device at a current moment. In this way, after obtaining the current image frame and the another image frame, the terminal device may implement localization of the terminal device based on the current image frame and the another image frame.

After obtaining the current image frame and the another image frame, the terminal device may obtain the pose for the current image frame and the pose that is for the another image frame and that is obtained after previous optimization. It should be noted that for the pose for the current image frame, current optimization may be performed on the pose for the current image frame based on the current image frame and the another image frame, to obtain a pose that is for the current image frame and that is obtained after current optimization and a pose that is for the another image frame and that is obtained after current optimization. It may be learned that the pose that is for the another image frame and that is obtained after previous optimization is a result obtained by performing, based on the another image frame, previous optimization on the pose for the another image frame.

The pose for the current image frame may be obtained in the following manner: first, calculating a predicted pose for the current image frame based on the pose that is for the another image frame and that is obtained after previous optimization and an inter-frame pose difference calculated by the terminal device; and then performing hierarchical sampling on the predicted pose for the current image frame, to obtain the pose for the current image frame.

Specifically, the terminal device may further have an odometer. The odometer may construct a three-dimensional coordinate system, for example, a vehicle body coordinate system, corresponding to the terminal device. FIG. 3 is a schematic diagram of the three-dimensional coordinate system corresponding to the terminal device according to an embodiment of this application. As shown in FIG. 3, in the three-dimensional coordinate system, an origin is a motion start point of the terminal device, an X-axis points to a front of the terminal device at the motion start point, a Y-axis points to a left side of the terminal device at the motion start point, and a Z-axis may be zero by default. In this case, after the terminal device starts to move from the origin, a location and an orientation of the terminal device continuously change (that is, rotation and translation occur). In a movement process of the terminal device, the odometer may calculate a difference between corresponding poses in which the terminal device respectively shoots two adjacent image frames. The difference between the poses is a pose difference between the two adjacent image frames, and may also be referred to as an inter-frame pose difference. The inter-frame pose difference may be represented by Formula (2):

$$\Delta T = \{\Delta R, \ \Delta t\} \qquad (2)$$

In the foregoing formula, $\Delta T$ indicates the inter-frame pose difference, $\Delta R$ indicates rotation between the two adjacent image frames, and $\Delta t$ indicates translation between the two adjacent image frames.

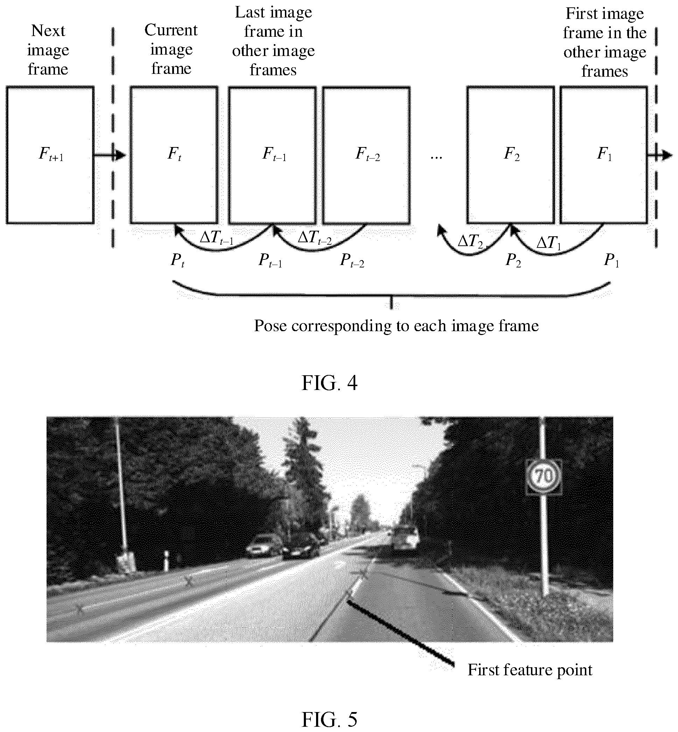

The following further describes the inter-frame pose difference with reference to FIG. 4, to further understand the inter-frame pose difference. FIG. 4 is a schematic diagram of the inter-frame pose difference according to an embodiment of this application. As shown in FIG. 4, a total quantity of the current image frame and other image frames before the current image frame is t . $F_1$ indicates a first image frame in the other image frames, $F_2$ indicates a second image frame in the other image frames, ..., and $F_{t-1}$ indicates a last image frame in the other image frames (that is, a previous image frame of the current image frame). $F_t$ indicates the current image frame. The odometer may obtain, through calculation, a pose difference $\Delta T_{t-1}$ between $F_1$ and $F_2$ , ..., and a pose difference $\Delta T_{t-1}$ between $F_{t-1}$ and $F_t$. In this case, the predicted pose for the current image frame may be obtained through calculation according to Formula (3):

$$P_t = P_{t-1} * \Delta T_{t-1} \qquad (3)$$

In the foregoing formula, $P_t$ indicates the predicted pose for the current image frame, and $P_{t-1}$ indicates a pose that is for a previous image frame and that is obtained after previous optimization. Based on Formula (3), the predicted pose for the current image frame may also be obtained through calculation according to Formula (4):

$$P_t = (\Delta T_{t-1} * \Delta T_{t-2} * \cdots * \Delta T_{t-m}) * P_{t-m} \qquad (4)$$

In the foregoing formula, $P_{t-m}$ indicates a pose that is for a $(t-m)^{th}$ image frame in the other image frames and that is obtained after previous optimization.

After the predicted pose for the current image frame is obtained, hierarchical sampling may be performed on the predicted pose, to obtain the pose for the current image frame, that is, an initial pose value for current optimization. Specifically, hierarchical sampling may be performed on the predicted pose for the current image frame in a plurality of manners, which are separately described below.

In a possible implementation, if the pose for the current image frame is a three-degree-of-freedom parameter, that is, includes a lateral axis coordinate, a longitudinal axis coordinate, and a yaw angle, a hierarchical sampling process includes: (1) Some map points may be randomly selected from a range specified in advance on the vector map as third map points, and a location of the third map point in a three-dimensional coordinate system corresponding to the vector map and a location of the first feature point in the current image frame are obtained. It may be understood that the location of the third map point in the three-dimensional coordinate system corresponding to the vector map is a three-dimensional coordinate, and the location of the first feature point in the current image frame is a two-dimensional coordinate. (2) The yaw angle of the predicted pose for the current image frame is kept unchanged, and the lateral axis coordinate and the longitudinal axis coordinate of the predicted pose for the current image frame are changed, to obtain a first candidate pose. (3) The location of the third map point in the three-dimensional coordinate system corresponding to the vector map is transformed based on the first candidate pose, to obtain a location of the third map point in a preset image coordinate system. This process is equivalent to projecting the third map point to the image coordinate system. (4) The lateral axis coordinate and the longitudinal axis coordinate of the predicted pose for the current image frame are kept unchanged, and the yaw angle of the predicted pose for the current image frame is changed, to obtain a second candidate pose. (5) The location of the first feature point in the current image frame is transformed based on the second candidate pose, to obtain a location of the first feature point in the image coordinate system. This process is equivalent to projecting the first feature point to the image coordinate system. (6) The pose for the current image frame is determined from a combination of the first candidate pose and the second candidate pose based on a value of a distance between the location of the third map point in the image coordinate system and the location of the first feature point in the image coordinate system. In the foregoing pose sampling manner, a calculation amount required in the pose sampling process may be effectively reduced.

The following provides descriptions with reference to an example, to further understand the foregoing sampling process. The example includes: (1) The first feature point in the current image frame and the third map point for hierarchical sampling on the vector map are determined. (2) The yaw angle of the current image frame is kept unchanged, sampling is performed for N1 times based on an original value of the lateral axis coordinate, and sampling is performed for N2 times based on an original value of the longitudinal axis coordinate, to obtain N1×N2 first candidate poses. (3) The third map point on the vector map is projected to the preset image coordinate system based on each first candidate pose, to obtain N1×N2 groups of new third map points. (4) The lateral axis coordinate and the longitudinal axis coordinate of the predicted pose for the current image frame are kept unchanged, and sampling is performed for N3 times based on an original value of the yaw angle, to obtain N3 second candidate poses. (5) The first feature point in the current image frame is projected to the preset image coordinate system based on each second candidate pose, to obtain N3 groups of new first feature points. (6) In the preset image coordinate system, N1×N2×N3 new pose combinations are formed based on the N1×N2 groups of new third map points and the N3 groups of new first feature points, a distance between a third map point and a first feature point in each combination is calculated, to obtain N1×N2×N3 distances, a minimum distance is selected from the distances, and the pose for the current image frame is formed by using a lateral axis coordinate and a longitudinal axis coordinate of a first candidate pose corresponding to the distance, and a yaw angle of a second candidate pose corresponding to the distance.

In another possible implementation, if the pose for the current image frame is a six-degree-of-freedom parameter, that is, includes a lateral axis coordinate, a longitudinal axis coordinate, a vertical axis coordinate, a yaw angle, a roll angle, and a pitch angle, a hierarchical sampling process includes: (1) A location of a third map point in a three-dimensional coordinate system corresponding to the vector map and a location of the first feature point in the current image frame are obtained. (2) The yaw angle, the roll angle, the pitch angle, and the vertical axis coordinate of the predicted pose for the current image frame are kept unchanged, and the lateral axis coordinate and the longitudinal axis coordinate of the predicted pose for the current image frame are changed, to obtain a first candidate pose. (3) The location of the third map point in the three-dimensional coordinate system corresponding to the vector map is transformed based on the first candidate pose, to obtain a location of the third map point in a preset image coordinate system. (4) The lateral axis coordinate, the longitudinal axis coordinate, the vertical axis coordinate, the roll angle, and the pitch angle of the predicted pose for the current image frame are kept unchanged, and the yaw angle of the predicted pose for the current image frame is changed, to obtain a second candidate pose. (5) The location of the first feature point in the current image frame is transformed based on the second candidate pose, to obtain a location of the first feature point in the image coordinate system. (6) A third candidate pose is determined from a combination of the first candidate pose and the second candidate pose based on a value of a distance between the location of the third map point in the image coordinate system and the location of the first feature point in the image coordinate system. (7) The lateral axis coordinate, the longitudinal axis coordinate, the yaw angle, and the roll angle of the predicted pose using the third candidate pose are kept unchanged, and a pitch angle and a vertical axis coordinate of the third candidate pose are changed, to obtain a fourth candidate pose. (8) The location of the third map point in the three-dimensional coordinate system corresponding to the vector map is transformed based on the fourth candidate pose, to obtain a location of the third map point in the current image frame. (9) The pose for the current image frame is determined from the fourth candidate pose based on a value of a distance between the location of the first feature point in the current image frame and the location of the third map point in the current image frame. In the foregoing pose sampling manner, a calculation amount required in the pose sampling process may be effectively reduced.

The following provides descriptions with reference to an example, to further understand the foregoing sampling process. The example includes steps (1) to (9). For steps (1) to (5), refer to steps (1) to (5) in the foregoing example. Details are not described herein again. (6) In the preset image coordinate system, $N1 \times N2 \times N3$ new combinations are formed based on $N1 \times N2$ groups of new third map points and $N3$ groups of new first feature points, a distance between a third map point and a first feature point in each combination is calculated, to obtain $N1 \times N2 \times N3$ distances, a minimum distance is selected from the distances, and the third candidate pose is formed by using a lateral axis coordinate and a longitudinal axis coordinate of a first candidate pose corresponding to the distance, and a yaw angle of a second candidate pose corresponding to the distance. (7) The lateral axis coordinate, the longitudinal axis coordinate, the yaw angle, and the roll angle of the predicted pose using the third candidate pose are kept unchanged, sampling is performed for $N4$ times based on an original value of the pitch angle, and sampling is performed for $N5$ times based on an original value of the vertical axis coordinate, to obtain $N4 \times N5$ fourth candidate poses. (8) The third map point on the vector map is projected to the current image frame based on each fourth candidate pose, to obtain $N4 \times N5$ groups of new third map points. (9) In the current image frame, $N4 \times N5$ new combinations are formed based on the $N4 \times N5$ groups of new third map points and the first feature point in the current image frame, a distance between a third map point and a first feature point in each combination is calculated, to obtain $N4 \times N5$ distances, a minimum distance is selected from the distances, and the pose for the current image frame is formed by using a pitch angle and a vertical axis coordinate of a fourth candidate pose corresponding to the distance, and the lateral axis coordinate, the longitudinal axis coordinate, the yaw angle, and the roll angle of the third candidate pose.

After the pose for the current image frame and the pose that is for the another image frame and that is obtained after previous optimization, semantic detection may be further performed on the current image frame and the another image frame, to obtain the first feature point in the current image frame and the second feature point in the another image frame. Specifically, semantic detection processing, that is, feature extraction, may be separately performed on the current image frame and the another image frame by using a neural network, to obtain the first feature point in the current image frame and the second feature point in the another image frame. The first feature point and the second feature point may be understood as semantic identifiers in images. It should be noted that the first feature point in the current image frame includes feature points of various types of objects in the traffic environment. FIG. 5 is a schematic diagram of the first feature point in the current image frame according to an embodiment of this application. As shown in FIG. 5, feature points of a lamp post and feature points of a lane line each may be pixels at two ends, and feature points of a traffic light and feature points of a sign each may be a plurality of pixels forming a rectangular box (that is, an outer bounding box). Similarly, so is the second feature point in the another image frame, and details are not described herein again.

It should be understood that the foregoing neural network is a trained neural network model. The following briefly describes a training process of the neural network.

Before model training is performed, a specific batch of to-be-trained image frames are obtained, and a real feature point in each to-be-trained image frame is determined in advance. After training starts, each to-be-trained image frame may be input into a to-be-trained model. Then, a feature point in each to-be-trained image frame is obtained by using the to-be-trained model, and these feature points are predicted feature points. Finally, a difference between the feature point in each to-be-trained image frame and a real feature point in the corresponding image frame is calculated by using a target loss function. If a difference between the two parts of feature points corresponding to a specific to-be-trained image frame falls within a satisfactory range, the to-be-trained image frame is considered as a satisfactory to-be-trained image frame; or if a difference between the two parts of feature points corresponding to a specific to-be-trained image frame falls outside a satisfactory range, the to-be-trained image frame is considered as an unqualified to-be-trained image frame. If there are only a few satisfactory to-be-trained image frames in the batch of to-be-trained image frames, a parameter of the to-be-trained model is adjusted, and another batch of to-be-trained image frames are used for training again, until there are a large quantity of satisfactory to-be-trained image frames, to obtain the neural network for semantic detection.

It should be further understood that in this embodiment, the pose for the current image frame is usually a pose of the terminal device in the three-dimensional coordinate system corresponding to the vector map during shooting of the current image frame. Similarly, the pose for the another image frame is a pose of the terminal device in the three-dimensional coordinate system corresponding to the vector map during shooting of the another image frame.

It should be further understood that for a process of previous optimization, refer to a process of current optimization. Similarly, for a process of next optimization, refer to the process of current optimization.

It should be further understood that in all image frames shot by the terminal device, a pose for the first image frame may be obtained by using a global positioning system (global positioning system, GPS) of the terminal device, and is used as an object of first optimization.

202: Obtain, from the vector map based on the pose for the current image frame, a first map point matching the first feature point.

After the pose for the current image frame is obtained in step 201, an initial pose value of the current image frame for current optimization is obtained. The first map point matching the first feature point may be obtained from the preset vector map in the terminal device based on the pose. Specifically, the first map point matching the first feature point may be obtained in a plurality of manners, which are separately described below.

In a possible implementation, a region including the terminal device, for example, a 150 m×150 m range, may be specified on the vector map. Coordinate transformation calculation is performed, based on the pose for the current image frame, on locations, in the three-dimensional coordinate system corresponding to the vector map, of a plurality of map points in the region, to obtain locations of these map points in the current image frame. This process is equivalent to projecting the plurality of map points in the region to the current image frame based on the pose for the current image frame. The first feature point in the current image frame includes feature points of various types of objects, and the plurality of map points in the region also include map points of various types of objects. Therefore, locations of the first feature point and these map points in the current image frame may be calculated by using a nearest neighbor algorithm, to perform matching between the first feature point and these map points on objects of a same type. In this way, the first map point matching the first feature point is determined from these map points. For example, a type of object such as a lamp post on the vector map may be represented by using a straight line formed by a plurality of map points. A projection of the straight line in the current image frame is still a straight line, subsequently referred to as a projected straight line. The type of object such as the lamp post in the current image frame is represented by using feature points at two ends, and the feature points at the ends are subsequently referred to as endpoints. In this case, when a lamp post A, a lamp post B, and a lamp post C on the vector map are projected to the current image frame, to determine which lamp post matches a lamp post D in the current image frame, an average value of distances between two endpoints of the lamp post D and a projected straight line of the lamp post A, an average value of distances between two endpoints of the lamp post D and a projected straight line of the lamp post B, and an average value of distances between two endpoints of the lamp post D and a projected straight line of the lamp post C may be calculated. A lamp post corresponding to a minimum average value is determined as a lamp post matching the lamp post D, and a map point of the lamp post matches a feature point of the lamp post D. For another example, a type of object such as a sign (or a traffic light) on the vector map may be represented by using a rectangular box formed by a plurality of map points, and a projection of the rectangular box in the current image frame is still a rectangular box. The type of object such as the sign in the current image frame is also represented by using a rectangular box formed by a plurality of feature points. In this case, when a sign X and a sign Y on the vector map are projected to the current image frame, to determine which sign matches a sign Z in the current image frame, an average value of distances between four vertices of a rectangular frame of the sign Z and projected straight lines of two parallel sides of a rectangular frame of a sign X, and an average value of distances between the four vertices of the rectangular frame of the sign Z and projected straight lines of two parallel sides of a rectangular frame of the sign Y may be calculated. A sign corresponding to a minimum average value is determined as a sign matching the sign Z, and a map point of the sign matches a feature point of the sign Z. For another example, a type of object such as a lane line on the vector map may be represented by using a straight line formed by a plurality of map points, and a projection of the straight line in the current image frame is still a straight line. The type of object such as the lane line in the current image frame is represented by using feature points at two ends. In this case, when a lane line E and a lane line F on the vector map are projected to the current image frame, to determine which lane line matches a lane line G in the current image frame, an average value of distances between two endpoints of the lane line G and a projected straight line of the lane line E and an overlapping degree between the lane line G and the projected straight line of the lane line E may be calculated. An average value of distances between the two endpoints of the lane line G and a projected straight line of the lane line F and an overlapping degree between the lane line G and the projected straight line of the lane line F are calculated. The distance and the overlapping degree are used as a comprehensive distance. A lane line corresponding to a minimum comprehensive distance (for example, if the overlapping degree corresponding to the lane line E is the same as that corresponding to the lane line F, a lane line corresponding to a short distance is a lane line corresponding to a short comprehensive distance) is determined as a lane line matching the lane line G, and a map point of the lane line matches a feature point of the lane line G.

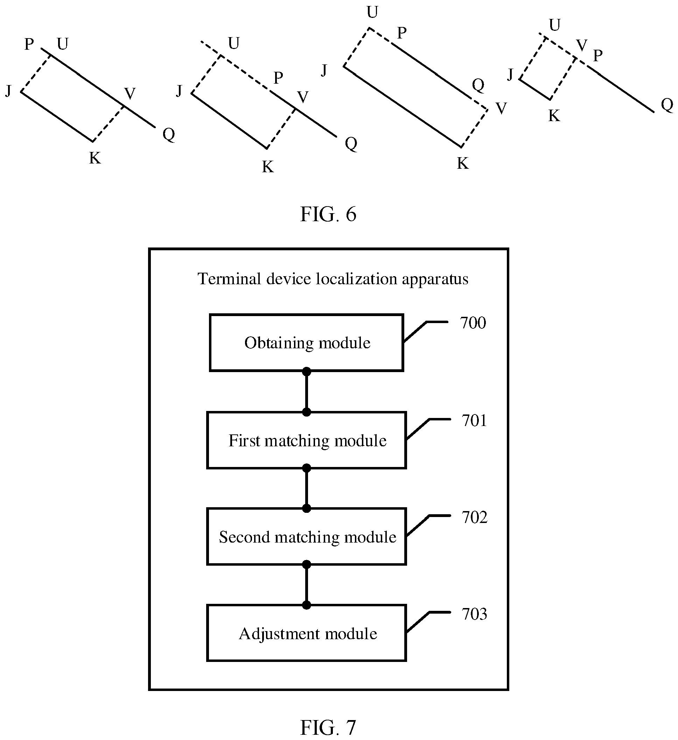

Specifically, a process of calculating the overlapping degree is shown in FIG. 6. FIG. 6 is a schematic diagram of calculating the overlapping degree according to an embodiment of this application. It is assumed that there is a lane line JK in the current image frame and a projected straight line PQ of the lane line on the vector map, a foot of an endpoint J on the projected straight line PQ is U, and a foot of an endpoint K on the projected straight line PQ is V Therefore, an overlapping degree between the lane line JK and the projected straight line PQ is shown in Formula (5):

$$l_{overlap} = \frac{d_{UV \cap PQ}}{d_{UV}} \qquad (5)$$

In the foregoing formula, $l_{overlap}$ indicates the overlapping degree, $d_{UV}$ indicates a length of a line segment UV, and $d_{UV \cap PQ}$ indicates a length of an overlapping part between the line segment UV and the line segment PQ. It may be learned based on Formula (5) that overlapping degrees from left to right in FIG. 6 are sequentially 1, $d_{PV}/d_{UV}$, $d_{PQ}/d_{UV}$, and 0.

In another possible implementation, a region including the terminal device may be specified on the vector map. Then, coordinate transformation calculation is performed, based on the pose for the current image frame, on the location, in the current image frame, of the first feature point in the current image frame, to obtain a location of the first feature point in the three-dimensional coordinate system corresponding to the vector map. This process is equivalent to projecting, based on the pose for the current image frame, the first feature point in the current image frame to the three-dimensional coordinate system corresponding to the vector map. The first feature point in the current image frame includes feature points of various types of objects, and the plurality of map points in the region on the vector map also include map points of various types of objects. Therefore, locations of the first feature point and these map points in the three-dimensional coordinate system corresponding to the vector map may be calculated by using a nearest neighbor algorithm, to perform matching between the first feature point and these map points on objects of a same type. In this way, the first map point matching the first feature point is determined from these map points.

In another possible implementation, a region including the terminal device may be specified on the vector map. Coordinate transformation calculation is performed, based on the pose for the current image frame, on locations, in the three-dimensional coordinate system corresponding to the vector map, of a plurality of map points in the region, to obtain locations of these map points in a three-dimensional coordinate system corresponding to the terminal device. In addition, coordinate transformation calculation may be further performed, based on the pose for the current image frame, on the location, in the current image frame, of the first feature point in the current image frame, to obtain a location of the first feature point in the three-dimensional coordinate system corresponding to the terminal device. The first feature point in the current image frame includes feature points of various types of objects, and the plurality of map points in the region on the vector map also include map points of various types of objects. Therefore, locations of the first feature point and these map points in the three-dimensional coordinate system corresponding to the terminal device may be calculated by using a nearest neighbor algorithm, to perform matching between the first feature point and these map points on objects of a same type. In this way, the first map point matching the first feature point is determined from these map points.

In the foregoing three implementations, feature points of all objects in the current image frame and map points of all objects in the region specified on the vector map are set in a specific coordinate system, to complete matching between the feature points and the map points. In addition, feature points and map points of some types of objects (for example, traffic lights, lamp posts, or signs) may alternatively be set in a specific coordinate system (for example, the current image frame) for matching, and feature points and map points of other types of objects (for example, lane lines) may be set in another coordinate system (for example, the three-dimensional coordinate system corresponding to the terminal device) for matching.

It should be noted that after the first map point matching the first feature point is obtained, it is equivalent to obtaining a distance between a location of the first feature point in a first coordinate system and a location of the first map point in the first coordinate system. The distance includes at least one of the following: 1: a distance between the location of the first feature point in the current image frame and a location of the first map point in the current image frame; 2: a distance between the location of the first feature point in the three-dimensional coordinate system corresponding to the vector map and a location of the first map point in the three-dimensional coordinate system corresponding to the vector map; and 3: a distance between the location of the first feature point in the three-dimensional coordinate system corresponding to the terminal device and a location of the first map point in the three-dimensional coordinate system corresponding to the terminal device.

The following provides descriptions with reference to an example, to further understand the foregoing descriptions. It is assumed that the current image frame includes a lamp post W1, a sign W2, a lane line W3, and a lane line W4, a lamp post W5 on the vector map matches the lamp post W1, a sign W6 on the vector map matches the sign W2, a lane line W7 on the vector map matches the lane line W3, and a lane line W8 on the vector map matches the lane line W4. When the first coordinate system has different meanings, there the following cases.

Case 1: When the first coordinate system is the current image frame, the distance between the location of the first feature point in the first coordinate system and the location of the first map point in the first coordinate system is the distance between the location of the first feature point in the current image frame and the location of the first map point in the current image frame, including: after projection to the current image frame, an average value of distances between two endpoints of the lamp post W1 and a projected straight line of the lamp post W5, an average value of distances between four vertices of a rectangular frame of the sign W2 and projected straight lines of two parallel sides of a rectangular frame of the sign W6, a comprehensive distance between the lane line W3 and the lane line W7, and a comprehensive distance between the lane line W4 and the lane line W8.

Case 2: When the first coordinate system includes the current image frame and the three-dimensional coordinate system corresponding to the terminal device, the distance between the location of the first feature point in the first coordinate system and the location of the first map point in the first coordinate system includes the distance between the location of the first feature point in the current image frame and the location of the first map point in the current image frame, and the distance between the location of the first feature point in the three-dimensional coordinate system corresponding to the terminal device and the location of the first map point in the three-dimensional coordinate system corresponding to the terminal device. The distance between the location of the first feature point in the current image frame and the location of the first map point in the current image frame includes: after projection to the current image frame, an average value of distances between two endpoints of the lamp post W1 and a projected straight line of the lamp post W5, and an average value of distances between four vertices of a rectangular frame of the sign W2 and projected straight lines of two parallel sides of a rectangular frame of the sign W6. The distance between the location of the first feature point in the three-dimensional coordinate system corresponding to the terminal device and the location of the first map point in the three-dimensional coordinate system corresponding to the terminal device includes: after projection to the three-dimensional coordinate system corresponding to the terminal device, a comprehensive distance between the lane line W3 and the lane line W7, and a comprehensive distance between the lane line W4 and the lane line W8.

Similarly, there are also Case 3 (when the first coordinate system is the three-dimensional coordinate system corresponding to the vector map), Case 4 (when the first coordinate system is the three-dimensional coordinate system corresponding to the terminal device), Case 5 (when the first coordinate system includes the current image frame and the three-dimensional coordinate system corresponding to the vector map), Case 6 (when the first coordinate system includes the three-dimensional coordinate system corresponding to the terminal device and the three-dimensional coordinate system corresponding to the vector map), and Case 7 (when the first coordinate system includes the current image frame, the three-dimensional coordinate system corresponding to the terminal device, and the three-dimensional coordinate system corresponding to the vector map). For these cases, refer to related descriptions of Case 1 and Case 2. Details are not described herein again.

203: Obtain, from the vector map based on the pose that is for the another image frame and that is obtained after previous optimization, a second map point matching the second feature point.

After the pose that is for the another image frame and that is obtained after previous optimization is obtained in step 201, an initial pose value of the another image frame for current optimization is obtained. The second map point matching the second feature point may be obtained from the vector map in the terminal device based on the pose.

It should be noted that after the second map point matching the second feature point is obtained, it is equivalent to obtaining a distance between a location of the second feature point in a second coordinate system and a location of the second map point in the second coordinate system. The distance includes at least one of the following: 1: a distance between the location of the second feature point in the another image frame and a location of the second map point in the another image frame; 2: a distance between a location of the second feature point in the three-dimensional coordinate system corresponding to the vector map and a location of the second map point in the three-dimensional coordinate system corresponding to the vector map; and 3: a distance between a location of the second feature point in the three-dimensional coordinate system corresponding to the terminal device and a location of the second map point in the three-dimensional coordinate system corresponding to the terminal device.

It should be noted that for a description of a process of obtaining the second map point, refer to a related description part of the process of obtaining the first map point in step 202. Details are not described herein again. Further, for the distance between the location of the second feature point in the second coordinate system and the location of the second map point in the second coordinate system, refer to a related description part of the distance between the location of the first feature point in the first coordinate system and the location of the first map point in the first coordinate system in step 202. Details are not described herein again.

204: Adjust, based on a target function, the pose for the current image frame, to obtain the pose that is for the current image frame and that is obtained after current optimization, as a localization result of the terminal device, where the target function includes a first matching error between the first feature point and the first map point and a second matching error between the second feature point and the second map point.

After the first map point matching the first feature point and the second map point matching the second feature point are obtained, the pose for the current image frame may be adjusted, that is, the pose for the current image frame is optimized, based on the target function constructed based on the first matching error between the first feature point and the first map point and the second matching error between the second feature point and the second map point, to obtain the pose that is for the current image frame and that is obtained after current optimization, as the localization result of the terminal device.

Specifically, an initial value of the first matching error may be first obtained based on the distance between the location of the first feature point in the first coordinate system and the location of the first map point in the first coordinate system. Still as described in the foregoing example, the initial value of the first matching error may be obtained according to Formula (6):

$$Huber_{\varepsilon 1}\left(d_{pp} + d_{pl}\right) + \beta * Huber_{\varepsilon 2}\left(d_{pH}\right)$$

$$d_{pp} = \sum_{i=1}^{n} d_{p}^{i}$$

$$d_{p}^{i} = \frac{d_{s}^{i} + d_{e}^{i}}{2}$$

$$d_{pl} = \sum_{i=1}^{m} d_{l}^{i}$$

$$d_{l}^{i} = \frac{d_{ls}^{i} + d_{le}^{i} + d_{rs}^{i} + d_{re}^{i}}{4}$$

$$d_{pH} = \sum_{i=1}^{k} d_{H}^{i}$$

$$d_{H}^{i} = \left\{ d_{h}^{i}, \ l_{overlap}^{i} \right\}$$

$$d_{h}^{i} = \frac{d_{a}^{i} + d_{b}^{i}}{2}$$

(6)

In the foregoing formula, the first matching error is determined based on $Huber_{\varepsilon 1}$ and $Huber_{\varepsilon 2}$. $Huber_{\varepsilon 1}$ indicates a *Huber* loss function with a parameter $\varepsilon 1$. $Huber_{\varepsilon 2}$ indicates a *Huber* loss function with a parameter $\varepsilon 2$. $\beta$ indicates a preset parameter. $d_{pp}$ indicates a distance corresponding to a type of object such as a lamp post in the current image frame. $d_{p}^{i}$ indicates a distance between an ith lamp post in the current image frame and a matched lamp post. $d_{s}^{i}$ and $d_{e}^{i}$ indicate distances between two endpoints of the ith lamp post and a projected straight line of the matching lamp post. $d_{pl}$ indicates distances corresponding to two types of objects such as a traffic light (or a sign) in the current image frame. $d_{l}^{i}$ indicates a distance between an ith traffic light (or sign) in the current image frame and a matched traffic light (or sign). $d_{ls}^{i}$, $d_{le}^{i}$, $d_{rs}^{i}$, and $d_{re}^{i}$ indicate distances between four vertices of the ith traffic light (or sign) and projected straight lines of two parallel sides of a rectangular frame of the matched traffic light. $d_{pH}$ indicates a comprehensive distance corresponding to a type of object such as a lane line in the current image frame. $d_{H}^{i}$ indicates a comprehensive distance between an ith lane line in the current image frame and a matched lane line. $d_{h}^{i}$ indicates a distance between the ith lane line and the matched lane line. $l_{overlap}^{i}$ indicates an overlapping degree between the i$^{th}$ lane line and the matched lane line. $d_a^i$ and $d_b^i$ indicate distances between two endpoints of the i$^{th}$ lane line and a projected straight line of the matched lane line.

Further, calculation may be further performed based on the distance between the location of the second feature point in the second coordinate system and the location of the second map point in the second coordinate system, to obtain an initial value of the second matching error. Still as in the foregoing example, the initial value of the second matching error may also be obtained according to Formula (6). Details are not described herein again.

After the initial value of the first matching error and the initial value of the second matching error are obtained, the initial values may be input to the target function. The target function is iteratively solved until a preset iteration condition is satisfied, to obtain the pose that is for the current image frame and that is obtained after current optimization. Based on Formula (6), the target function may be represented according to Formula (7):

$$T_t^* = argmin_{T_t} \sum_{i=1}^{t} Huber_{\varepsilon 1}(d_{pp}^i + d_{pl}^i) + \beta * Huber_{\varepsilon 2}(d_{pH}^i) \quad (7)$$

In the foregoing formula, in the current image frame and the another image frame, $d_{pp}^i$ indicates a distance corresponding to a type of object such as a lamp post in an i$^{th}$ image frame, $d_{pl}^i$ indicates distances corresponding to two types of objects such as a traffic light (or a sign) in the i$^{th}$ image frame, and $d_{pH}^i$ indicates a distance corresponding to a type of object such as a lane line in the i$^{th}$ image frame.

It should be understood that this embodiment is described only according to Formula (6) and Formula (7) as an example, and does not constitute a limitation on a manner of calculating a matching error and a manner of expressing the target function.

In a process of iteratively solving the target function, after a first iteration is completed, that is, the initial value of the first matching error and the initial value of the second matching error are input to the target function for solving, a pose that is for the current image frame and that is obtained through the first iteration and a pose that is for the another image frame and that is obtained through the first iteration may be obtained. Then, calculation is performed based on the pose that is for the current image frame and that is obtained through the first iteration and the pose that is for the another image frame and that is obtained through the first iteration, to obtain an inter-frame pose difference obtained through the first iteration. If a difference between the inter-frame pose difference and the inter-frame pose difference calculated by the odometer of the terminal device is less than a preset threshold, which is equivalent to convergence of the target function, iteration is stopped, and the pose that is for the current image frame and that is obtained through the first iteration is used as the pose that is for the current image frame and that is obtained after the current optimization. If a difference between the inter-frame pose difference and the inter-frame pose difference calculated by the odometer of the terminal device is greater than or equal to a preset threshold, a second iteration is performed.

When the second iteration is performed, the first map point matching the first feature point may be re-determined based on the pose that is for the current image frame and that is obtained through the first iteration (that is, step 202 is performed again), and the second map point matching the second feature point may be re-determined based on the pose that is for the another image frame and that is obtained through the first iteration (that is, step 203 is performed again). Then, a first iterative value of the first matching error between the first feature point and the first map point and a first iterative value of the second matching error between the second feature point and the second map point are calculated. Next, the first iterative value of the first matching error and the first iterative value of the second matching error are input to the target function for solving, to obtain a pose that is for the current image frame and that is obtained through the second iteration and a pose that is for the another image frame and that is obtained through the second iteration may be obtained. Later on, calculation is performed based on the pose that is for the current image frame and that is obtained through the second iteration and the pose that is for the another image frame and that is obtained through the second iteration, to obtain an inter-frame pose difference obtained through the second iteration. If a difference between the inter-frame pose difference and the inter-frame pose difference calculated by the odometer of the terminal device is less than the preset threshold, iteration is stopped, and the pose that is for the current image frame and that is obtained through the second iteration is used as the pose that is for the current image frame and that is obtained after current optimization. If a difference between the inter-frame pose difference and the inter-frame pose difference calculated by the odometer of the terminal device is greater than or equal to the preset threshold, a third iteration is performed until a quantity of iterations is equal to a preset quantity. In this case, it is also considered that the target function converges, and a pose that is for the current image frame and that is obtained through a last iteration is used as the pose that is for the current image frame and that is obtained after current optimization.

In this embodiment, after the current image frame and the another image frame before the current image frame are obtained, the first map point matching the first feature point in the current image frame and the second map point matching the second feature point in the another image frame before the current image frame may be obtained from the vector map. Then, the pose for the current image frame may be adjusted based on the target function constructed based on the first matching error between the first feature point and the first map point and the second matching error between the second feature point and the second map point, to obtain the pose that is for the current image frame and that is obtained after current optimization. In the foregoing process, the target function includes both a matching error between a feature point in the current image frame and a map point in the vector map and a matching error between a feature point in the another image frame and a map point in the vector map. Therefore, when the pose for the current image frame is adjusted based on the target function, not only impact of the current image frame on a process of optimizing the pose for the current image frame is considered, but also impact of the another image frame on the process of optimizing the pose for the current image frame is considered, that is, association between the current image frame and the another image frame is considered. In this way, factors are more comprehensively considered. Therefore, the localization result of the terminal device obtained in this manner is more accurate.

Further, in the related technology, the target function is constructed only based on a matching error between a feature point in the current image frame and a map point in the vector map. Because content that can be presented in the current image frame is limited, when the map point matching the feature point in the current image frame is selected, map points are usually sparse and overlap. As a result, when the target function is iteratively solved, the matching error between the feature point and the map point cannot be small enough, and the accuracy of the localization result is affected. In this embodiment, the target function is constructed based on the first matching error between the first feature point in the current image frame and the first map point on the vector map, and the second matching error between the second feature point in the another image frame and the second map point on the vector map. Because content presented in a plurality of image frames usually differs greatly, a case in which map points are sparse and overlap may be avoided. Therefore, when the target function is iteratively solved (poses for the plurality of image frames are jointly optimized), the first matching error and the second matching error may be small enough, and the accuracy of the localization result is improved.

Further, the pose that is for the current image frame and that is obtained through hierarchical sampling may be used as the initial pose value of the current image frame for current optimization, so that a convergence speed and robustness of current optimization are improved.

The foregoing describes in detail the terminal device localization method provided in embodiments of this application. The following describes a terminal device localization apparatus provided in embodiments of this application. FIG. 7 is a schematic diagram of a structure of the terminal device localization apparatus according to an embodiment of this application. As shown in FIG. 7, the apparatus includes:

a first matching module 701, configured to obtain, from a vector map, a first map point matching a first feature point in a current image frame shot by a terminal device;
a second matching module 702, configured to obtain, from the vector map, a second map point matching a second feature point in another image frame before the current image frame; and
an adjustment module 703, configured to adjust, based on a target function, a pose in which the terminal device shoots the current image frame, to obtain a pose in which the terminal device shoots the current image frame and that is obtained after current adjustment, as a localization result of the terminal device, where the target function includes a first matching error between the first feature point and the first map point and a second matching error between the second feature point and the second map point.

In a possible implementation, the apparatus further includes an obtaining module 700, configured to obtain the first feature point in the current image frame, the second feature point in the another image frame before the current image frame, the pose in which the terminal device shoots the current image frame, and a pose in which the terminal device shoots the another image frame and that is obtained after previous adjustment. The first matching module 701 is configured to obtain, from the vector map based on the pose in which the terminal device shoots the current image frame, the first map point matching the first feature point. The second matching module 702 is configured to obtain, from the vector map based on the pose in which the terminal device shoots the another image frame and that is obtained after previous adjustment, the second map point matching the second feature point.

In a possible implementation, the adjustment module 703 is configured to: perform calculation based on a distance between a location of the first feature point in a first coordinate system and a location of the first map point in the first coordinate system, to obtain an initial value of the first matching error; perform calculation based on a distance between a location of the second feature point in a second coordinate system and a location of the second map point in the second coordinate system, to obtain an initial value of the second matching error; and iteratively solve the target function based on the initial value of the first matching error and the initial value of the second matching error until a preset iteration condition is satisfied, to obtain the pose in which the terminal device shoots the current image frame and that is obtained after current adjustment.

In a possible implementation, the distance between the location of the first feature point in the first coordinate system and the location of the first map point in the first coordinate system includes at least one of the following: a distance between a location of the first feature point in the current image frame and a location of the first map point in the current image frame; a distance between a location of the first feature point in a three-dimensional coordinate system corresponding to the vector map and a location of the first map point in the three-dimensional coordinate system corresponding to the vector map; or a distance between a location of the first feature point in a three-dimensional coordinate system corresponding to the terminal device and a location of the first map point in the three-dimensional coordinate system corresponding to the terminal device.

In a possible implementation, the distance between the location of the second feature point in the second coordinate system and the location of the second map point in the second coordinate system includes at least one of the following: a distance between a location of the second feature point in the another image frame and a location of the second map point in the another image frame; a distance between a location of the second feature point in a three-dimensional coordinate system corresponding to the vector map and a location of the second map point in the three-dimensional coordinate system corresponding to the vector map; or a distance between a location of the second feature point in a three-dimensional coordinate system corresponding to the terminal device and a location of the second map point in the three-dimensional coordinate system corresponding to the terminal device.

In a possible implementation, the iteration condition is: for any iteration, if a difference between an inter-frame pose difference obtained in the iteration and an inter-frame pose difference calculated by the terminal device is less than a preset threshold, stopping iteration, where the inter-frame pose difference obtained in the iteration is determined based on a pose that is obtained in the iteration and in which the terminal device shoots the current image frame and a pose that is obtained in the iteration and in which the terminal device shoots the another image frame; or if a difference is greater than or equal to a threshold, performing a next iteration until a quantity of iterations is equal to a preset quantity.

In a possible implementation, a quantity of other image frames is determined based on a speed of the terminal device.

In a possible implementation, the obtaining module 700 is configured to: calculate, based on the pose in which the terminal device shoots the another image frame and that is obtained after previous adjustment and the inter-frame pose difference calculated by the terminal device, a predicted pose in which the terminal device shoots the current image frame; and perform hierarchical sampling on the predicted pose in which the terminal device shoots the current image frame, to obtain the pose in which the terminal device shoots the current image frame.

In a possible implementation, if the pose in which the terminal device shoots the current image frame includes a lateral axis coordinate, a longitudinal axis coordinate, and a yaw angle, the obtaining module 700 is configured to: obtain a location of a third map point in the three-dimensional coordinate system corresponding to the vector map and the location of the first feature point in the current image frame; keep the yaw angle of the predicted pose in which the terminal device shoots the current image frame unchanged, and change the lateral axis coordinate and the longitudinal axis coordinate of the predicted pose in which the terminal device shoots the current image frame, to obtain a first candidate pose; transform, based on the first candidate pose, the location of the third map point in the three-dimensional coordinate system corresponding to the vector map, to obtain a location of the third map point in a preset image coordinate system; keep the lateral axis coordinate and the longitudinal axis coordinate of the predicted pose in which the terminal device shoots the current image frame unchanged, and change the yaw angle of the predicted pose in which the terminal device shoots the current image frame, to obtain a second candidate pose; transform the location of the first feature point in the current image frame based on the second candidate pose, to obtain a location of the first feature point in the image coordinate system; and determine, from a combination of the first candidate pose and the second candidate pose based on a value of a distance between the location of the third map point in the image coordinate system and the location of the first feature point in the image coordinate system, the pose in which the terminal device shoots the current image frame. In the foregoing pose sampling manner, a calculation amount required in the pose sampling process may be effectively reduced.

In a possible implementation, if the pose in which the terminal device shoots the current image frame includes a lateral axis coordinate, a longitudinal axis coordinate, a vertical axis coordinate, a yaw angle, a roll angle, and a pitch angle, the obtaining module 700 is configured to: obtain a location of a third map point in the three-dimensional coordinate system corresponding to the vector map and the location of the first feature point in the current image frame; keep the yaw angle, the roll angle, the pitch angle, and the vertical axis coordinate of the predicted pose in which the terminal device shoots the current image frame unchanged, and change the lateral axis coordinate and the longitudinal axis coordinate of the predicted pose in which the terminal device shoots the current image frame, to obtain a first candidate pose; transform, based on the first candidate pose, the location of the third map point in the three-dimensional coordinate system corresponding to the vector map, to obtain a location of the third map point in a preset image coordinate system;

keep the lateral axis coordinate, the longitudinal axis coordinate, the vertical axis coordinate, the roll angle, and the pitch angle of the predicted pose in which the terminal device shoots the current image frame unchanged, and change the yaw angle of the predicted pose in which the terminal device shoots the current image frame, to obtain a second candidate pose; transform the location of the first feature point in the current image frame based on the second candidate pose, to obtain a location of the first feature point in the image coordinate system; determine a third candidate pose from a combination of the first candidate pose and the second candidate pose based on a value of a distance between the location of the third map point in the image coordinate system and the location of the first feature point in the image coordinate system; keep the lateral axis coordinate, the longitudinal axis coordinate, the yaw angle, and the roll angle of the predicted pose using the third candidate pose unchanged, and change a pitch angle and a vertical axis coordinate of the third candidate pose, to obtain a fourth candidate pose; transform, based on the fourth candidate pose, the location of the third map point in the three-dimensional coordinate system corresponding to the vector map, to obtain a location of the third map point in the current image frame; and determine, from the fourth candidate pose based on a value of a distance between the location of the first feature point in the current image frame and the location of the third map point in the current image frame, the pose in which the terminal device shoots the current image frame. In the foregoing pose sampling manner, a calculation amount required in the pose sampling process may be effectively reduced.

It should be noted that content such as information exchange between the modules/units of the apparatus and execution processes is based on a same idea as that of the method embodiment of this application, and brings same technical effects as those of the method embodiment of this application. For specific content, refer to the descriptions in the method embodiment in embodiments of this application. Details are not described herein again.

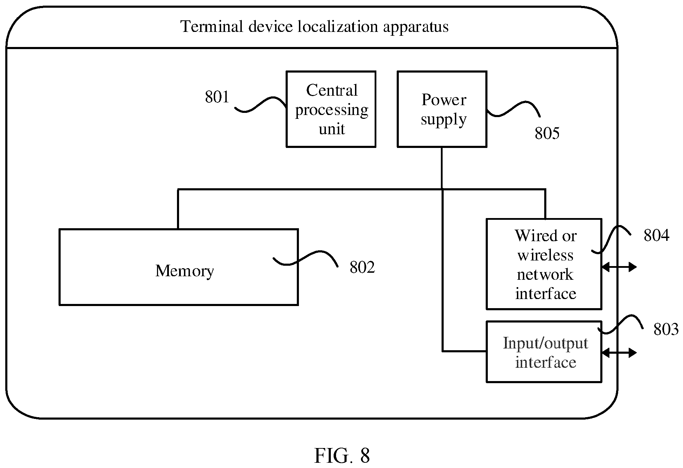

FIG. 8 is a schematic diagram of another structure of the terminal device localization apparatus according to an embodiment of this application. As shown in FIG. 8, an embodiment of a computer in embodiments of this application may include one or more central processing units 801, a memory 802, an input/output interface 803, a wired or wireless network interface 804, and a power supply 805.

The memory 802 may perform transitory storage or persistent storage. Further, the central processing unit 801 may be configured to communicate with the memory 802, and perform, on the computer, a series of instruction operations in the memory 802.

In this embodiment, the central processing unit 801 may perform the steps of the method in the embodiment shown in FIG. 2, and details are not described herein again.

In this embodiment, specific functional module division in the central processing unit 801 may be similar to a division manner of the obtaining module, the first matching module, the second matching module, and the optimization module described in FIG. 7, and details are not described herein again.

An embodiment of this application further relates to a computer storage medium, including computer-readable instructions. When the computer-readable instructions are executed, the method shown in FIG. 2 is implemented.

An embodiment of this application further relates to a computer program product including instructions. When the computer program product is run on a computer, the computer is enabled to perform the method shown in FIG. 2.

It may be clearly understood by a person skilled in the art that, for ease and brevity of description, for detailed working processes of the foregoing system, apparatus, and unit, reference may be made to corresponding processes in the foregoing method embodiment, and details are not described herein again.

In the several embodiments provided in this application, it should be understood that the disclosed system, apparatus, and method may be implemented in other manners. For example, the described apparatus embodiment is merely an example. For example, division of the units is merely logical function division, and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, and may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium capable of storing program code, such as a USB flash drive, a removable hard disk, a read-only memory (ROM, Read-Only Memory), a random access memory (RAM, Random Access Memory), a magnetic disk, or an optical disc.

**Claims**

1. A terminal device localization method, wherein the method comprises:

    obtaining, from a vector map, a first map point matching a first feature point in a current image frame shot by a terminal device;
    obtaining, from the vector map, a second map point matching a second feature point in another image frame before the current image frame; and
    adjusting, based on a target function, a pose in which the terminal device shoots the current image frame, to obtain a pose in which the terminal device shoots the current image frame and that is obtained after current adjustment, as a localization result of the terminal device, wherein the target function comprises a first matching error between the first feature point and the first map point and a second matching error between the second feature point and the second map point.

2. The method according to claim 1, wherein the method further comprises:

    obtaining the first feature point in the current image frame, the second feature point in the another image frame before the current image frame, the pose in which the terminal device shoots the current image frame, and a pose in which the terminal device shoots the another image frame and that is obtained after previous adjustment;
    the obtaining, from a vector map, a first map point matching a first feature point comprises:

        obtaining, from the vector map based on the pose in which the terminal device shoots the current image frame, the first map point matching the first feature point; and
        the obtaining, from the vector map, a second map point matching a second feature point comprises:
        obtaining, from the vector map based on the pose in which the terminal device shoots the another image frame and that is obtained after previous adjustment, the second map point matching the second feature point.

3. The method according to claim 1 or 2, wherein the adjusting, based on a target function, a pose in which the terminal device shoots the current image frame, to obtain a pose in which the terminal device shoots the current image frame and that is obtained after current adjustment comprises:

    performing calculation based on a distance between a location of the first feature point in a first coordinate system and a location of the first map point in the first coordinate system, to obtain an initial value of the first matching error;
    performing calculation based on a distance between a location of the second feature point in a second coordinate system and a location of the second map point in the second coordinate system, to obtain an initial value of the second matching error; and
    iteratively solving the target function based on the initial value of the first matching error and the initial value of the second matching error until a preset iteration condition is satisfied, to obtain the pose in which the terminal device shoots the current image frame and that is obtained after current adjustment.

4. The method according to claim 3, wherein the distance between the location of the first feature point in the first coordinate system and the location of the first map point in the first coordinate system comprises at least one of the following:

    a distance between a location of the first feature point in the current image frame and a location of the first map point in the current image frame;
    a distance between a location of the first feature point in a three-dimensional coordinate system corresponding to the vector map and a location of the first map point in the three-dimensional coordinate system corresponding to the vector map; or
    a distance between a location of the first feature point in a three-dimensional coordinate system corresponding to the terminal device and a location of the first map point in the three-dimensional coordinate system corresponding to the terminal device.

5. The method according to claim 3, wherein the distance between the location of the second feature point in the second coordinate system and the location of the second map point in the second coordinate system comprises at least one of the following:

a distance between a location of the second feature point in the another image frame and a location of the second map point in the another image frame;

a distance between a location of the second feature point in a three-dimensional coordinate system corresponding to the vector map and a location of the second map point in the three-dimensional coordinate system corresponding to the vector map; or

a distance between a location of the second feature point in a three-dimensional coordinate system corresponding to the terminal device and a location of the second map point in the three-dimensional coordinate system corresponding to the terminal device.

6. The method according to any one of claims 3 to 5, wherein the iteration condition is: for any iteration, if a difference between an inter-frame pose difference obtained in the iteration and an inter-frame pose difference calculated by the terminal device is less than a preset threshold, stopping the iteration, wherein the inter-frame pose difference obtained in the iteration is determined based on a pose that is obtained in the iteration and in which the terminal device shoots the current image frame and a pose that is obtained in the iteration and in which the terminal device shoots the another image frame, and the inter-frame pose difference is a pose difference between two adjacent image frames, shot by the terminal device, in the current image frame and the another image frame; and if the difference is greater than or equal to the threshold, performing a next iteration until a quantity of iterations is equal to a preset quantity.

7. The method according to any one of claims 1 to 6, wherein a quantity of other image frames is determined based on a speed of the terminal device.

8. The method according to any one of claims 2 to 7, wherein the obtaining the pose in which the terminal device shoots the current image frame comprises:

calculating, based on the pose in which the terminal device shoots the another image frame and that is obtained after previous adjustment and the inter-frame pose difference calculated by the terminal device, a predicted pose in which the terminal device shoots the current image frame; and

performing hierarchical sampling on the predicted pose in which the terminal device shoots the current image frame, to obtain the pose in which the terminal device shoots the current image frame.

9. A terminal device localization apparatus, wherein the apparatus comprises:

a first matching module, configured to obtain, from a vector map, a first map point matching a first feature point in a current image frame shot by a terminal device;

a second matching module, configured to obtain, from the vector map, a second map point matching a second feature point in another image frame before the current image frame; and

an adjustment module, configured to adjust, based on a target function, a pose in which the terminal device shoots the current image frame, to obtain a pose in which the terminal device shoots the current image frame and that is obtained after current adjustment, as a localization result of the terminal device, wherein the target function comprises a first matching error between the first feature point and the first map point and a second matching error between the second feature point and the second map point.

10. The apparatus according to claim 9, wherein the apparatus further comprises:

an obtaining module, configured to obtain the first feature point in the current image frame, the second feature point in the another image frame before the current image frame, the pose in which the terminal device shoots the current image frame, and a pose in which the terminal device shoots the another image frame and that is obtained after previous adjustment;

the first matching module is configured to obtain, from the vector map based on the pose in which the terminal device shoots the current image frame, the first map point matching the first feature point; and

the second matching module is configured to obtain, from the vector map based on the pose in which the terminal device shoots the another image frame and that is obtained after previous adjustment, the second map point matching the second feature point.

11. The apparatus according to claim 9 or 10, wherein the adjustment module is configured to:

perform calculation based on a distance between a location of the first feature point in a first coordinate system and a location of the first map point in the first coordinate system, to obtain an initial value of the first matching error;
perform calculation based on a distance between a location of the second feature point in a second coordinate system and a location of the second map point in the second coordinate system, to obtain an initial value of the second matching error; and
iteratively solve the target function based on the initial value of the first matching error and the initial value of the second matching error until a preset iteration condition is satisfied, to obtain the pose in which the terminal device shoots the current image frame and that is obtained after current adjustment.

12. The apparatus according to claim 11, wherein the distance between the location of the first feature point in the first coordinate system and the location of the first map point in the first coordinate system comprises at least one of the following:

a distance between a location of the first feature point in the current image frame and a location of the first map point in the current image frame;
a distance between a location of the first feature point in a three-dimensional coordinate system corresponding to the vector map and a location of the first map point in the three-dimensional coordinate system corresponding to the vector map; or
a distance between a location of the first feature point in a three-dimensional coordinate system corresponding to the terminal device and a location of the first map point in the three-dimensional coordinate system corresponding to the terminal device.

13. The apparatus according to claim 11, wherein the distance between the location of the second feature point in the second coordinate system and the location of the second map point in the second coordinate system comprises at least one of the following:

a distance between a location of the second feature point in the another image frame and a location of the second map point in the another image frame;
a distance between a location of the second feature point in a three-dimensional coordinate system corresponding to the vector map and a location of the second map point in the three-dimensional coordinate system corresponding to the vector map; or
a distance between a location of the second feature point in a three-dimensional coordinate system corresponding to the terminal device and a location of the second map point in the three-dimensional coordinate system corresponding to the terminal device.

14. The apparatus according to any one of claims 11 to 13, wherein the iteration condition is: for any iteration, if a difference between an inter-frame pose difference obtained in the iteration and an inter-frame pose difference calculated by the terminal device is less than a preset threshold, stopping iteration, wherein the inter-frame pose difference obtained in the iteration is determined based on a pose that is obtained in the iteration and in which the terminal device shoots the current image frame and a pose that is obtained in the iteration and in which the terminal device shoots the another image frame, and the inter-frame pose difference is a pose difference between two adjacent image frames, shot by the terminal device, in the current image frame and the another image frame; or if a difference is greater than or equal to a threshold, performing a next iteration until a quantity of iterations is equal to a preset quantity.

15. The apparatus according to any one of claims 9 to 14, wherein a quantity of other image frames is determined based on a speed of the terminal device.

16. The apparatus according to any one of claims 10 to 15, wherein the obtaining module is configured to:

calculate, based on the pose in which the terminal device shoots the another image frame and that is obtained after previous adjustment and the inter-frame pose difference calculated by the terminal device, a predicted pose in which the terminal device shoots the current image frame; and

perform hierarchical sampling on the predicted pose in which the terminal device shoots the current image frame, to obtain the pose in which the terminal device shoots the current image frame.

**17.** A terminal device localization apparatus, comprising a memory and a processor, wherein the memory stores code; the processor is configured to execute the code; and when the code is executed, the terminal device localization apparatus performs the method according to any one of claims 1 to 8.

**18.** A computer storage medium, wherein the computer storage medium stores a computer program; and when the program is executed by a computer, the computer is enabled to implement the method according to any one of claims 1 to 8.

**19.** A computer program product, wherein the computer program product stores instructions; and when the instructions are executed by a computer, the computer is enabled to implement the method according to any one of claims 1 to 8.

FIG. 1

Obtain a first feature point in a current image frame, a second feature point in another image frame before the current image frame, a pose for the current image frame, and a pose that is for the another image frame and that is obtained after previous optimization

201

Obtain, from a preset vector map based on the pose for the current image frame, a first map point matching the first feature point

202

Obtain, from the vector map based on the pose that is for the another image frame and that is obtained after previous optimization, a second map point matching the second feature point

203

Optimize, based on a target function, the pose for the current image frame, to obtain a pose that is for the current image frame and that is obtained after current optimization, as a localization result of a terminal device, where the target function includes a first matching error between the first feature point and the first map point and a second matching error between the second feature point and the second map point

204

FIG. 2

FIG. 3

FIG. 4

First feature point

FIG. 5

FIG. 6

Terminal device localization apparatus

Obtaining module 700

First matching module 701

Second matching module 702

Adjustment module 703

FIG. 7

FIG. 8

EP 4 322 020 A1

# INTERNATIONAL SEARCH REPORT

| International application No. |
|---|
| **PCT/CN2022/089007** |

## A. CLASSIFICATION OF SUBJECT MATTER

G06F 16/245(2019.01)i; G06F 16/29(2019.01)i; G06T 7/73(2017.01)i

According to International Patent Classification (IPC) or to both national classification and IPC

## B. FIELDS SEARCHED

Minimum documentation searched (classification system followed by classification symbols)

G06F; G06T

Documentation searched other than minimum documentation to the extent that such documents are included in the fields searched

Electronic data base consulted during the international search (name of data base and, where practicable, search terms used)

CNTXT, CNABS, DWPI, CNKI, ENTXT, ENTXTC: 矢量地图; 位姿; 特征点; 帧; 匹配; 定位; 误差; vector map; pose; characteristic point; frame; matching; positioning; error

## C. DOCUMENTS CONSIDERED TO BE RELEVANT

| Category* | Citation of document, with indication, where appropriate, of the relevant passages | Relevant to claim No. |
|---|---|---|
| PX | CN 113239072 A (HUAWEI TECHNOLOGIES CO., LTD. et al.) 10 August 2021 (2021-08-10) entire document | 1-19 |
| X | CN 111780764 A (HANGZHOU HIKROBOT TECHNOLOGY CO., LTD.) 16 October 2020 (2020-10-16) description, paragraphs [0121]-[0295] | 1-19 |
| A | WO 2017022033 A1 (FUJITSU LTD.) 09 February 2017 (2017-02-09) entire document | 1-19 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2022** | **19 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/089007**

| Patent document cited in search report | | | Publication date (day/month/year) | Patent family member(s) | | | Publication date (day/month/year) |
|---|---|---|---|---|---|---|---|
| CN | 113239072 | A | 10 August 2021 | None | | | |
| CN | 111780764 | A | 16 October 2020 | None | | | |
| WO | 2017022033 | A1 | 09 February 2017 | JP | 6338021 | B2 | 06 June 2018 |
| | | | | JPWO | 2017022033 | A1 | 01 February 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110460636